# EUROPÄISCHE PATENTSCHRIFT

(11) **EP 1 450 087 B1**
(45) Veröffentlichungstag und Bekanntmachung des Hinweises auf die Patenterteilung: **05.12.2007**
(21) Anmeldenummer: 04003607.1
(22) Anmeldetag: 18.02.2004
(51) Int. Cl.: F16K 31/06

(54) **Elektromagnetisches Ventil**
Electromagnetic valve
Soupape électromagnétique

(30) Priorität: 19.02.2003 DE 10307060
(43) Veröffentlichungstag der Anmeldung: 25.08.2004
(73) Patentinhaber: AWECO APPLIANCE SYSTEMS GmbH & Co. KG, 88099 Neukirch (DE)
(72) Erfinder: Schrott, Harald, 88131 Lindau (DE)
(74) Vertreter: Eisele, Otten, Roth & Dobler

(56) Entgegenhaltungen:
- DE-A1- 19 922 089
- DE-C1- 19 516 885
- GB-A- 686 658
- GB-A- 1 417 669

## Beschreibung

Die Erfindung betrifft ein Ventil nach dem Oberbegriff des Anspruchs 1.

Ventile werden vielfältig in den verschiedensten Haushaltsmaschinen eingesetzt. So werden beispielsweise wasserführungen in Kaffeemaschinen über derartige Ventile geschaltet. Hierbei sind im Handel bereits Ventile bekannt geworden, bei denen ein Ventilkörper mit einem Dichtelement aus nachgiebigem Elastomer versehen wird. Der Ventilkörper wird zwischen zwei Polschuhen hin und her bewegt und in seiner jeweiligen Endposition durch ein Magnetfeld gehalten.

Aus anderen Anwendungen sind Ventile bekannt, die durch die Verwendung von Permanentmagneten bistabil sind, d.h. die Steuerspule muss lediglich zum Wechseln des Schaltzustands impulsartig mit Strom beaufschlagt werden (vgl. z.B. DE 199 22 089).

Die Verwendung von nachgiebigem Dichtmaterial, wie einem Elastomer, bringt gewisse Anforderungen an die Ventilkonstruktion mit sich. So wird das Dichtmaterial durch die vielfache Betätigung während der Lebensdauer des Ventils aufgrund des Anpressdrucks auf den entsprechenden Ventilsitz einem Verschleiß unterworfen, wodurch die Dichtfunktion nach einer gewissen Anzahl von Betätigungen Schaden nehmen kann.

Aus diesem Grund wurden zur genauen Einstellung des Anpressdrucks bereits federgelagerte Elastomerdichtungen vorgesehen, um den Anpressdruck weitgehend gleichmäßig zu dosieren.

Aufgabe der Erfindung ist es, ein Ventil für Fluidleitungen, insbesondere für eine Haushaltsmaschine gemäß dem Oberbegriff des Anspruchs 1 vorzuschlagen, bei dem mit vergleichsweise geringem Anpressdruck eine langlebige Dichtfunktion gewährleistet ist.

Diese Aufgabe wird ausgehend von einem Ventil nach dem Oberbegriff des Anspruchs 1 durch dessen kennzeichnenden Merkmale gelöst.

Durch die in den Unteransprüchen genannten Maßnahmen sind vorteilhafte Ausführungen und Weiterbildungen der Erfindung möglich.

Dementsprechend wird das erfindungsgemäße Ventil mit einem wenigstens teilweise innerhalb einer elektromagnetischen Spule befindlichen Ventilgehäuse und mit wenigstens zwei Polen aus magnetisierbarem Material versehen, zwischen denen ein wenigstens teilweise magnetischer oder magnetisierbarer Ventilkörper beweglich angeordnet ist, wobei wenigstens eine Fluidleitung durch einen Pol geführt ist und in einem ringförmig vorstehenden Ventilsitz ausmündet. Der Ventilkörper umfasst hierbei einen Bereich aus nachgiebigem Dichtmaterial, insbesondere Elastomer, der zum dichtenden Formschluss am Ventilsitz vorgesehen ist.

Ein erfindungsgemäßes Ventil ist nunmehr dadurch gekennzeichnet, dass außerhalb des ringförmigen Ventilsitzes eine Anschlagfläche für den Ventilkörper vorgesehen ist und dass zwischen dem Ventilsitz und der Anschlagfläche eine Vertiefung, vorzugsweise in Form einer Ringnut, zur Aufnahme von durch den Anpressdruck auf den Ventilsitz verformtem Dichtmaterial vorgesehen ist.

Die Anschlagfläche für den Ventilkörper begrenzt den Weg des Ventilkörpers und somit den Anpressdruck, mit dem das Dichtmaterial auf den Ventilsitz gedrückt wird. Die Vertiefung oder die Ringnut, die um den Ventilsitz herum vorgesehen ist, ermöglicht darüber hinaus die Aufnahme von durch den Anpressdruck verformbarem Dichtmaterial. Das Dichtmaterial findet darin einen Ausweichraum, in das es dem Anpressdruck ausweichen kann, so dass der Druck innerhalb des Materials begrenzt ist. Eine erfindungsgemäße Ausführungsform ist im Vergleich mit bisherigen Ausführungen, insbesondere mit federgelagerten Dichtelementen, erheblich weniger aufwendig in der Fertigung, ohne dass die Lebensdauer der Dichtfunktion beeinträchtigt ist.

Das Dichtmaterial kann im Ventilkörper hierbei als Einlegeteil ausgebildet werden oder aber unmittelbar in den ventilkörper in eine entsprechende Ausnehmung vergossen werden. Vorteilhafterweise wird hierbei das Dichtmaterial so im Ventilkörper angeordnet, dass es bündig mit Gegenanschlagfläche des Ventilkörpers abschließt, was zur Folge hat, dass sich beim Anschlag des Ventilkörpers mit der Gegenanschlagfläche auf der Anschlagfläche des entsprechenden Pols ein mit Ausnahme des Ventilsitzes im Wesentlichen geschlossener Raum ergibt, an dessen Kontur sich das nachgiebige Dichtmaterial anzupassen hat.

Bei vielen Anwendungen, insbesondere beim Einsatz in einer Kaffeemaschine, gestaltet sich die Montage beispielsweise aufgrund von Platzmangel oder einer entsprechenden Leitungsführung der Anschlüsse schwierig. Zur Vereinfachung der Montage wird daher in einer Weiterbildung der Erfindung das Ventilgehäuse so ausgeführt, dass es sich innerhalb der Spule drehen kann. Auf diese Weise kann der Anschluss des Ventils wesentlich flexibler vorgenommen werden. So kann beispielsweise bei fest montiertem Ventil die Spule zur Herstellung der elektrischen Anschlüsse gedreht werden. Es kann jedoch auch ein Anschluss, beispielsweise durch eine Verschraubung an einem feststehenden Gewinde dadurch hergestellt werden, dass das ventilgehäuse bei feststehender Spule gedreht wird. Im Falle eines gewinkelten Anschlusses am Ventilgehäuse kann die Anschlussrichtung durch Drehen beliebig gewählt werden.

Die vorgenannten Vorteile eines drehbaren Ventilgehäuses sind ohne weiteres auch ohne die erfindungsgemäße Ausgestaltung des Ventilsitzes und seiner Umgebung gemäß Anspruch 1 zu erzielen. Die drehbare Ausführungsform des Ventilgehäuses stellt demnach eine eigenständige Erfindung dar, die darüber hinaus unabhängig von Anspruch 1 durch die in den Unteransprüchen genannten Maßnahmen weitergebildet werden kann.

Um das Ventilgehäuse gegenüber der Steuerspule oder umgekehrt zu verdrehen, wird vorzugsweise eine Drehhilfe vorgesehen, die beispielsweise am Außenumfang in Form zweier planparallelen Schlüsselflächen zum Ansatz eines Gabelschlüssels dienen können.

In einer Weiterbildung der Erfindung wird diese drehbare Ausführung dadurch verwirklicht, dass das Ventilgehäuse wenigstens teilweise drehsymmetrisch, insbesondere als Zylinderrohr ausgebildet ist. Eine drehsymmetrische Ausführung vereinfacht die drehbare Lagerung innerhalb der Spule, wobei die Ausgestaltung als Zylinderrohr die Verwendung handelsüblicher Rohrstücke ermöglicht, wodurch der Aufwand in der Fertigung deutlich reduziert wird.

Weiterhin ist es von Vorteil, wenn beide Polschuhe mit Fluidleitungen versehen werden. In diesem Fall ist der Einsatz der Polschuhe und deren Abdichtung gegenüber dem Ventilgehäuse erheblich vereinfacht. Die Polschuhe können flächig, beispielsweise mit einer Zylindermantelfläche an dem Ventilgehäuse, angelegt und dort fest verbunden, beispielsweise verpresst, verlötet, verschweißt oder verklebt werden. Somit ist die Ventilkammer, d.h. der Bereich zwischen den Polschuhen, innerhalb dessen der Ventilkörper beweglich ist, abgedichtet, wobei die Fluidzufuhr bzw. -abfuhr durch die in den Polschuhen vorgesehene Leitung realisiert sind.

Weiterhin werden in einer besonderen Ausführungsform die Polschuhe so ausgebildet, dass sie aus dem Ventilgehäuse stirnseitig herausragen. Dies ermöglicht die unmittelbare Verbindung der Polschuhe mit Jochblechen oder sonstigen Elementen zum Rückschluss des Magnetfeldes.

Darüber hinaus können in einer solchen Ausführungsform die Polschuhe mit den Leitungsanschlüssen für die Fluidzufuhr bzw. -abfuhr versehen werden. Der direkte Anschluss der Fluidzufuhr bzw. -abfuhr an die Polschuhe wiederum ermöglicht es, das Ventilgehäuse kürzer auszubilden.

Insbesondere kann das Ventilgehäuse auf die Länge der Spule gekürzt werden, wodurch eine Fixierung des Ventilgehäuses in axialer Richtung durch entsprechende Fixierelemente möglich ist, die sich außen stirnseitig an die Steuerspule anlegen.

In einer besonderen Weiterbildung dieser Ausbildungsform wird für die Fixierung des Ventilgehäuses wenigstens ein Jochblech verwendet, das zugleich für den Rückschluss des Magnetfelds vorgesehen ist. Ein solches Jochblech wird vorzugsweise stirnseitig an die Steuerspule angefügt, um möglichst wenig Luftspalte für den Durchtritt des Magnetfeldes offen zu lassen.

Darüber hinaus wird durch eine Fixierung des Ventilgehäuses innerhalb der Steuerspule mittels eines ohnehin vorhandenen Jochblechs die Anzahl der Teile reduziert und die Montage erheblich vereinfacht.

Vorzugsweise wird weiterhin ein Führungselement außerhalb des Ventilgehäuses vorgesehen. Ein solches Führungselement dient dazu, das Ventilgehäuse im Innern der Steuerspule in radialer Richtung zu fixieren.

In einer bevorzugten Ausführungsform wird ein solches Führungselement als Hülse ausgebildet, so dass das Ventilgehäuse umfangsseitig durchgehend geführt wird.

In einer besonderen Ausführungsform wird das erfindungsgemäße Ventil mittels wenigstens einem Permanentmagneten bistabil ausgeführt, so dass zum Schalten lediglich ein Steuerimpuls durch die Steuerspule erfolgen muss, der jeweilige Schaltzustand jedoch auch stromlos gehalten wird.

In einer Weiterbildung dieser Ausführungsform wird zudem der bzw. die Permanentmagnete mittels des Führungselementes im Innern der Spule fixiert. Durch diese Mehrfachfunktion des Führungselementes wird wiederum der Aufwand für die Fertigung des Ventils vereinfacht.

In einer Weiterbildung dieser Ausführungsform werden zwei Führungselemente vorgesehen, die den bzw. die Permanentmagnete zwischen sich einschließen. Auf diese Weise ist es möglich, die Magnete einerseits am Ventilgehäuse anzufügen und andererseits über die Führungselemente im Innern der Steuerspule zu fixieren. Werden die Magnete beispielsweise als Ringmagnete ausgeführt, so können diese in radialer Richtung einerseits durch das Ventilgehäuse sowie andererseits durch die Steuerspule und in axialer Richtung über die zwei Führungshülsen durch außen liegende, nach Möglichkeit ohnehin vorhandene Bauelemente, z.B. durch ein Jochblech, fixiert werden. Weitere Befestigungsmaßnahmen erübrigen sich demnach.

Insbesondere kann wie im Falle der Verwendung eines Jochbleches für die Fixierung der Führungshülsen das gleiche Fixierelement wie zur Fixierung des Ventilgehäuses verwendet werden.

Weiterhin hat es sich als vorteilhaft erwiesen, wenn der bzw. die Magnete und das bzw. die Führungselemente formschlüssig aneinander gefügt werden. Auf diese Weise wird eine Magnetbewegung beim Schalten des Ventils und damit auch die durch eine solche Magnetbewegung verursachte Geräuschentwicklung unterbunden. Eine Geräuschentwicklung wird vor allem bei der Verwendung in Haushaltsgeräten als Störung empfunden und ist daher unerwünscht.

Um eine solche Bewegung auch bei größeren Fertigungstoleranzen auszuschließen, kann in einer besonderen Ausführungsform ein zusätzliches Ausgleichselement vorgesehen werden. In Frage kommt hierbei beispielsweise ein Einlegeteil, insbesondere aus nachgiebigem Material, oder ein Klebematerial zur Fixierung der Permanentmagnete. Auch das Einbringen von aushärtbarem Gießmaterial kann als Ausgleich für Fertigungstoleranzen herangezogen werden, um den bzw. die Permanentmagnete zuverlässig auch bei den Schaltvorgängen des Ventils zu fixieren.

In einer anderen Ausführungsform werden der bzw. die Permanentmagnete aus verformbarem Material gebildet, so dass sie unter Druck aneinander gefügt werden können. In Frage kommen hierzu sogenannte kunststoffgebundene Permanentmagnete, die bereits im Handel erhältlich sind.

Eine weitere Möglichkeit, eine Magnetbewegung während des Schaltvorgangs zu unterdrücken, besteht darin, die Magnete mit verformbaren Vorsprüngen zu versehen, die beim Einlegen und Zusammendrücken durch äußere Führungshülsen den bzw. die Magnete fest einspannen.

Neben der Anwendung in Haushaltsmaschinen, wie Kaffeemaschinen oder dergleichen ist ein erfindungsgemäßes Ventil auch in anderen Bereichen, z.B. im Bereich der Analytik oder allgemein im Bereich pharmazeutischer und chemischer Anlagen einsetzbar.

Ein Ausführungsbeispiel der Erfindung ist in der Zeichnung dargestellt und wird anhand der Figuren nachfolgend näher erläutert.

Im Einzelnen zeigen:
- Figur 1: einen Längsschnitt durch ein erfindungsgemäßes Ventil,
- Figur 2: einen Längsschnitt durch den Pol mit Ventilsitz,
- Figur 3: eine Ausschnittvergrößerung des Ventilsitzes,
- Figur 4: einen Längsschnitt durch den Ventilkörper,
- Figur 5: eine Stirnansicht des Ventilkörpers gemäß Figur 4,
- Figur 6: einen Längsschnitt durch eine weitere Ausführungsform eines erfindungsgemäßen Ventils und
- Figur 7: einen Längsschnitt durch den Ventilkörper gemäß der Ausführung nach Figur 6.

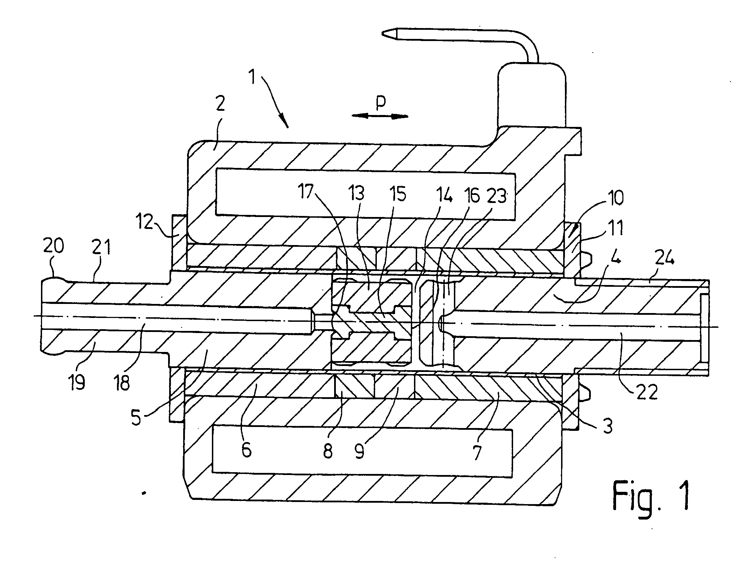

Das Ventil 1 gemäß Figur 1 umfasst eine Steuerspule 2, in deren Innern sich ein Ventilgehäuse 3 in Form eines Rohrstücks befindet. In das Ventilgehäuse 3 sind zwei Pole oder Polschuhe 4, 5 eingesetzt und dort dichtend mit dem Ventilgehäuse 3 verbunden, beispielsweise verlötet, verpresst, verschweißt, verklebt, usw.. Wie anhand von Figur 1 unschwer erkennbar ist, endet das Ventilgehäuse 3 bündig mit der Steuerspule 2.

Außerhalb des Ventilgehäuses 3, aber innerhalb der Steuerspule 2 sind zwei Führungshülsen 6, 7 angeordnet, die zwischen sich zwei Ringmagnete 8, 9 einschließen. Die Ringmagnete 8, 9 sowie die Führungshülsen 6, 7 sind formschlüssig aneinander gelegt und so dimensioniert, dass die Führungshülsen 6, 7 ebenfalls bündig mit der Steuerspule 2 enden. Sowohl das Ventilgehäuse 3 als auch die Führungshülsen 6, 7 und somit die Ringmagnete 8, 9 sind durch ein oder zwei außen die Steuerspule 2 umgreifende Jochbleche 10 in den der Spulenöffnung gegenüberliegenden Bereichen fixiert. Die Polschuhe 4, 5 durchsetzen entsprechende Öffnungen in den Bereichen 11, 12 des bzw. der Jochbleche 10. Durch diesen Aufbau ist das Ventilgehäuse 3 drehbar im Innern der Steuerspule 2 gelagert.

Ein Ventilkörper 13 ist in Richtung des Doppelpfeils P verschiebbar in der durch die Polschuhe 4, 5 sowie das Ventilgehäuse 3 gebildeten Ventilkammer 14 angeordnet. Der Ventilkörper 13 umfasst ein Dichtelement 15, das in eine entsprechende Ausnehmung des Ventilkörpers 13 eingegossen ist. An der freien Seite 16 des Ventilkörpers 13 ist erkennbar, dass das Dichtelement 15 bündig mit dem Ventilkörper 13 endet. Auf der gegenüberliegenden Seite ist das Dichtelement entsprechend ausgebildet, in der vorliegenden Stellung jedoch, wie nachfolgend beschrieben wird, verformt.

Vorliegend ist nur ein Dichtsitz 17 an dem Polschuh 5 angebracht. In den Dichtsitz 17 mündet eine Fluidleitung 18, an die ihrerseits eine außenseitige Leitung angeschlossen werden kann. Zum Anschluss eines Schlauches ist der überstehende Bereich des Polschuhs 5 als Schlauchtülle 19 ausgebildet. Über den Wulst 20 kann ein Schlauch aufgeschoben und in dem zylindrischen Bereich 21 hinter dem Wulst 20' mittels eines Klemmrings verspannt werden.

Der Polschuh 4 umfasst ebenfalls eine Fluidleitung 22, die in axialer Richtung verläuft und in eine rechtwinklig dazu stehende Bohrung 23 mündet. Diese Bohrung 23 dient dazu, die Strömung in Richtung des Innenumfangs des Ventilgehäuses 3 zu lenken, da dort außerhalb des Ventilkörpers 13 in axialer Richtung die Strömung durch die Ventilkammer 14 erfolgt. Der Ventilkörper 13 wird nicht unmittelbar stirnseitig angeströmt, so dass dessen Beweglichkeit durch die Fluidströmung weniger beeinträchtigt wird.

Die Anordnung der rechtwinklig zueinander stehenden Bohrungen 22, 23, die leicht von außen in den Polschuh 4 gebohrt werden können, ist besonders vorteilhaft für die Fertigung.

Außenseitig ist an dem Polschuh 4 ein Außengewinde 24 angebracht, so dass der Fluidanschluss auf dieser Seite durch eine Verschraubung herzustellen ist.

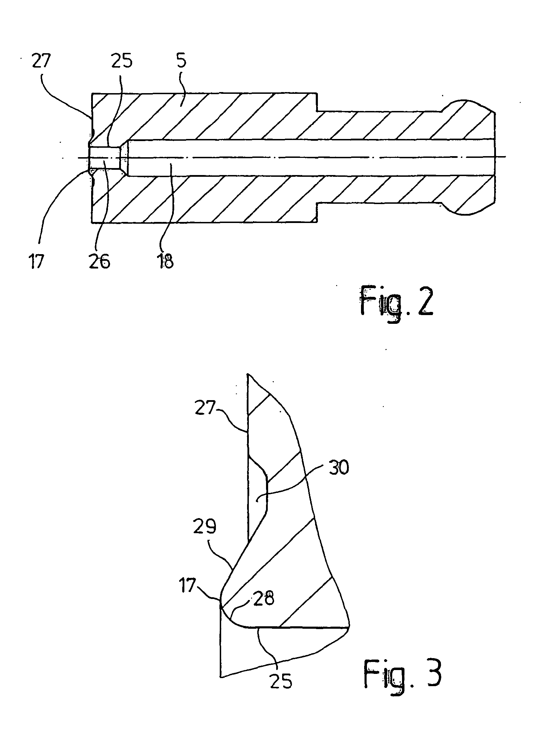

Der Polschuh 5 ist in der vergrößerten Darstellung gemäß Figur 2 deutlicher erkennbar. Der Dichtsitz 17 ist in Form eines Ringvorsprungs ausgebildet. Innerhalb des Dichtsitzes 17 geht dieser in die Wandung 25 der Bohrung 26 über, durch die die Fluidleitung 18 am Ventilsitz 17 ausmündet. Außerhalb des Ventilsitzes 17 ist eine Anschlagfläche 27 vorgesehen, an der der Ventilkörper 13 anschlagen kann.

Der Übergangsbereich zwischen Ventilsitz 17 und Anschlagfläche 27 ist in der Vergrößerung gemäß Figur 3 im Einzelnen dargestellt. Der ringförmige Ventilsitz 17 geht mit einem Radius 28 in die Wandung 25 der Bohrung 26 über. Nach außen hin ist eine Abschrägung 29 angebracht, die über die Höhe der Anschlagfläche 27 hinaus in eine Ringnut 30 übergeht.

Der Ringnut 30 kommt eine entscheidende Bedeutung zu. Beim Anpressen des Ventilkörpers 13 auf den Polschuh 5, wie in Figur 1 gezeigt, verformt sich das Dichtelement 15, das dementsprechend aus nachgiebigem Material, beispielsweise einem Elastomer, besteht. Im Bereich der Bohrung 26 kann sich das Material daher dem Radius 28 anschmiegen und ins Innere der Bohrung 26 ausweichen.

Außerhalb des Ventilsitzes 17 legt sich das Material an die Abschrägung 29 an und taucht in die Ringnut 30 ein. Die Ringnut 30 ist so dimensioniert, dass sie die Verdrängung des Materials durch den vorspringenden Ventilsitz 17 wenigstens teilweise kompensiert. Durch dieses Ausgleichsvolumen wird der Druck im Innern des Dichtelementes 15, der durch den Anpressdruck des Ventilkörpers 13 auf die Anschlagfläche 27 hervorgerufen wird, beschränkt. Trotz dieser Reduzierung des auf das Dichtmaterial wirkenden Drucks ist ein zuverlässig dichtender Formschluss zwischen dem Dichtelement 15 und dem Ventilsitz 17 gewährleistet, wobei jedoch der Verschleiß erheblich reduziert wird.

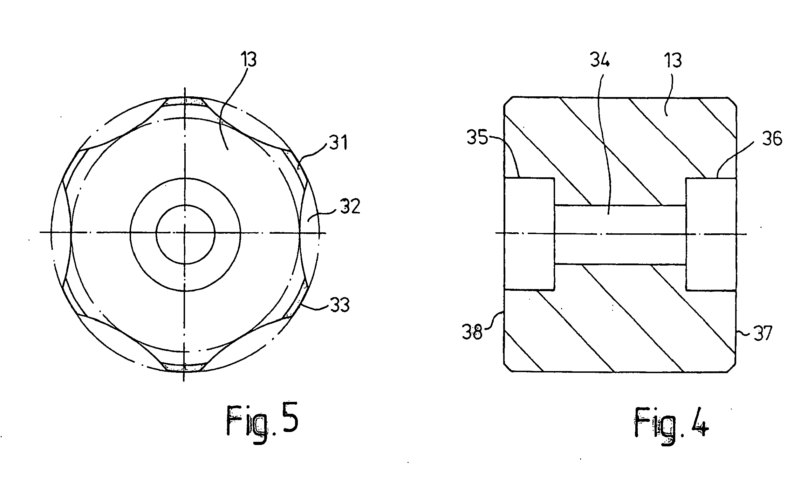

Der Ventilkörper selbst ist, wie anhand von Figur 5 erkennbar, drehsymmetrisch mit gleich verteilten Rippen 31 und dazwischen liegenden Kanälen 32 versehen. Mit den Rippen 31 ist eine Führung an der Innenseite des Ventilgehäuses 3 gewährleistet, während durch die Kanäle 32 die freie Strömung des Fluids gewährleistet ist. Dieser Aufbau ermöglicht die außenseitige Umströmung des Ventilkörpers, so dass innere Fluidführungen nicht erforderlich sind, wobei zugleich die Führungsfläche des Ventilkörpers 13 auf die Kontaktflächen 33 der Rippen 31 reduziert ist, wodurch die Reibung bei der Bewegung des Ventilkörpers 13 deutlich vermindert wird.

Eine Bohrung 34 im Innern des Ventilkörpers 13 mit endseitigen Verbreiterungen 35, 36 dienen zur Aufnahme des Dichtelementes 15. Das Dichtelement 15 wird in die Bohrung 34 so eingebracht, beispielsweise eingegossen, dass es bündig mit den Stirnseiten 37, 38 des Ventilkörpers 13 endet.

Durch die Verbreiterungen 35, 36 ist das so gebildete Dichtelement in axialer Richtung im Ventilkörper 13 fixiert. Durch den symmetrischen Aufbau kann darüber hinaus ein solcher Ventilkörper 13 auch in Ventilen Verwendung finden, bei denen beidseits des Ventilkörpers 13 ein Ventilsitz angebracht und dementsprechend beidseits eine Dichtfunktion des Ventilkörpers 13 erforderlich ist.

Durch die erfindungsgemäße Ringnut 30, die in der Darstellung gemäß Figur 1 nur aufgrund der kleinen Dimensionierung nicht so deutlich wie in Figur 5 erkennbar ist, erübrigen sich in Verbindung mit der Anschlagfläche 27 aufwendige Maßnahmen, wie beispielsweise eine federnde Lagerung oder dergleichen, zur Einschränkung des Anpressdrucks, um das Dichtelement 15 zu schonen.

Darüber hinaus ist das Ventilgehäuse 3 mitsamt den Polschuhen 4, 5 im Innern der Steuerspule drehbar gelagert, wodurch die Montage des Ventils 1 erheblich vereinfacht wird. Durch die komplette Anordnung des Ventils im Wesentlichen innerhalb der Steuerspule ergibt sich eine insgesamt kompakte Bauform. Die formschlüssige Anordnung der Führungshülsen 6, 7 sowie der Magnete 8, 9 sorgt darüber hinaus für einen äußerst geräuscharmen Betrieb.

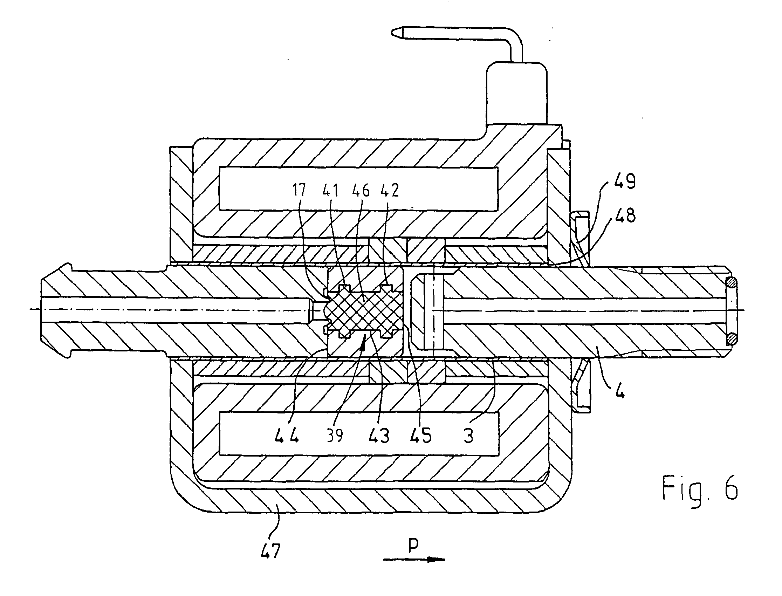

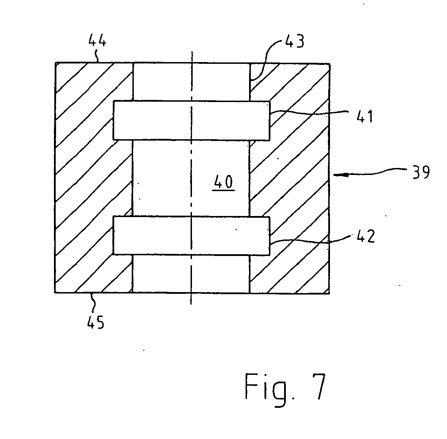

Die Ausführungsform gemäß den Figuren 6 und 7 unterscheidet sich durch eine andere Gestaltung des Ventilkörpers 39. Die zentrale Bohrung 40 ist in dieser Ausführungsform im Verhältnis zum Gesamtdurchmesser des Ventilkörpers 39 breiter ausgeführt. Darüber hinaus sind zwei innere Einstiche 41, 42 in die Wandung 43 der Bohrung 40 eingearbeitet. Die Einstiche 41, 42 sind in der Nähe der Stirnseiten 44, 45 angeordnet.

Dies hat zur Folge, dass das entsprechend ausgebildete Dichtelement 46 beim Abheben von dem Ventil 17 auch bei höheren Drücken weniger Verformungen ausgesetzt ist.

Bei einer Ausgestaltung des Ventilkörpers gemäß Figur 4 mit der vergleichsweise schmalen zentralen Bohrung 34 und der an der gegenüberliegenden Stirnseite bestehenden Verankerung durch die Verbreiterung 36 besteht insbesondere bei Verwendung eines entsprechend weichen Elastomers für das Dichtelement die Gefahr, dass sich beim Abheben vom Ventilsitz 17 gegen hohe Drücke das Dichtelement 15 nicht vom Dichtsitz 17 abhebt, sondern lediglich in die Länge streckt. Dieser Effekt ist bei der Ausgestaltung gemäß den Figuren 6 und 7 zum einen dadurch verhindert, dass die Geometrie durch den größeren Querschnitt verändert ist und somit eine Längenerstreckung des Dichtelementes 46 erschwert wird. Darüber hinaus wird das Dichtelement durch den Einstich 41 näher am Ventilsitz 17 im Ventilkörper 39 verankert, so dass auch hier einer entsprechenden Längenausdehnung durch die Elastizität des Dichtelementes 46 entgegengewirkt wird. Durch die Verankerung in dem Einstich 42 wird auch einer entsprechenden Längenausdehnung im bezogen auf den Ventilsitz 17 hinteren Bereich des Dichtelementes 46 entgegengewirkt.

Weiterhin ist in der Ausführung gemäß Figur 6 erkennbar, dass kein geschlossenes, sondern ein u-förmiges Jochblech 47 verwendet wird. Die Fixierung in axialer Richtung ist hierbei einerseits durch den Anschlag 48 des rohrförmigen Ventilgehäuses 3 am Jochblech 47 und andererseits durch eine Federscheibe 49 auf der dem Ventilgehäuse 3 gegenüberliegenden Seite des Jochblechs 47 verwirklicht. Die Montage geschieht demnach folgendermaßen. Zunächst wird das komplett montierte Ventil 1 in Richtung des Pfeils P bis zum Anschlag 48 des Gehäuses 3 an das Jochblech 47 in die Steuerspule eingeschoben. Anschließend wird von der gegenüberliegenden Seite her die Federscheibe 49 aufgeschoben. Diese Scheibe 49 verkrallt sich hierbei in dem entsprechenden Polschuh 4.

Ein erfindungsgemäßes Ventil ist mit einer äußerst kleinen Anzahl unterschiedlicher Teile zusammenzufügen, so dass die Fertigung insgesamt mit deutlich reduziertem Aufwand gegenüber bisherigen Ventilen möglich ist.

### Bezugszeichenliste:

- 1: Ventil
- 2: Steuerspule
- 3: Ventilgehäuse
- 4: Polschuh
- 5: Polschuh
- 6: Führungshülse
- 7: Führungshülse
- 8: Ringmagnet
- 9: Ringmagnet
- 10: Jochblech
- 11: Bereich
- 12: Bereich
- 13: Ventilkörper
- 14: Ventilkammer
- 15: Dichtelement
- 16: Stirnseite
- 17: Ventilsitz
- 18: Fluidleitung
- 19: Schlauchtülle
- 20: Wulst
- 21: Bereich
- 22: Fluidleitung
- 23: Bohrung
- 24: Außengewinde
- 25: Wandung
- 26: Bohrung
- 27: Anschlagfläche
- 28: Radius
- 29: Abschrägung
- 30: Ringnut
- 31: Rippe
- 32: Kanal
- 33: Kontaktfläche
- 34: Bohrung
- 35: Verbreiterung
- 36: Verbreiterung
- 37: Stirnseite
- 38: Stirnseite
- 39: Ventilkörper
- 40: Bohrung
- 41: Einstich
- 42: Einstich
- 43: Wandung
- 44: Stirnseite
- 45: Stirnseite
- 46: Dichtelement
- 47: Jochblech
- 48: Anschlag
- 49: Federscheibe

## Patentansprüche

1. Ventil zum Schalten einer Fluidleitung, insbesondere für wasserführende Haushaltsmaschinen wie Kaffeemaschinen oder dergleichen,
- mit einem wenigstens teilweise innerhalb einer elektromagnetischen Spule befindlichen Ventilgehäuse,
- wenigstens zwei Polen aus magnetisierbarem Material,
- zwischen denen ein wenigstens teilweise magnetischer oder magnetisierbarer Ventilkörper beweglich angeordnet ist,
- wobei wenigstens eine Fluidleitung durch einen Pol geführt ist und in einem ringförmig vorstehenden Ventilsitz ausmündet,
- und der Ventilkörper einen Bereich aus nachgiebigem Dichtmaterial zum dichtenden Formschluss am Ventilsitz aufweist,
**dadurch gekennzeichnet, dass**
- außerhalb des ringförmigen Ventilsitzes 17 eine Anschlagfläche (27) für den Ventilkörper (13) und
- zwischen dem ventilsitz (17) und der Anschlagfläche (27) eine Vertiefung (30) zur Aufnahme von durch den Anpressdruck auf den Ventilsitz (17) verformtes Dichtmaterial vorgesehen ist
und dass die Anschlagfläche (27) den Anpressdruck begrenzt.

2. Ventil nach Anspruch 1, **dadurch gekennzeichnet, dass** das Ventilgehäuse (3) drehbar in der Spule (2) gelagert ist.

3. Ventil nach einem der vorgenannten Ansprüche, **dadurch gekennzeichnet, dass** das Ventilgehäuse (3) wenigstens teilweise als Zylinderrohr ausgebildet ist.

4. Ventil nach einem der vorgenannten Ansprüche, **dadurch gekennzeichnet, dass** beide Polschuhe (4, 5) Fluidleitungen (18, 22) umfassen.

5. Ventil nach einem der vorgenannten Ansprüche, **dadurch gekennzeichnet, dass** die Polschuhe (4, 5) aus dem Ventilgehäuse (3) stirnseitig herausragen.

6. Ventil nach einem der vorgenannten Ansprüche, **dadurch gekennzeichnet, dass** die Polschuhe (4, 5) Leitungsanschlüsse (19, 24) aufweisen.

7. Ventil nach einem der vorgenannten Ansprüche, **dadurch gekennzeichnet, dass** das Ventilgehäuse (3) im Wesentlichen die gleiche Länge aufweist wie die Steuerspule (2).

8. Ventil nach einem der vorgenannten Ansprüche, **dadurch gekennzeichnet, dass** die Fixierung des Ventilsgehäuses (3) in der Spule (2) über außerhalb der Steuerspule (2) angeordnete Fixierelemente(11, 12) vorgesehen ist.

9. Ventil nach einem der vorgenannten Ansprüche, **dadurch gekennzeichnet, dass** ein oder mehrere Jochbleche (11, 12) als Fixierelement vorgesehen sind.

10. Ventil nach einem der vorgenannten Ansprüche, **dadurch gekennzeichnet, dass** wenigstens ein Führungselement (6, 7) außerhalb des ventilgehäuses (3) innerhalb der Steuerspule (2) angeordnet ist.

11. Ventil nach Anspruch 10, dass das Führungselement als Hülse (6, 7) ausgebildet ist.

12. Ventil nach einem der vorgenannten Ansprüche, **dadurch gekennzeichnet, dass** es mittels wenigstens einem Permanentmagnet (8, 9) bistabil ist.

13. Ventil nach einem der Ansprüche 10 und 11 und nach Anspruch 12, **dadurch gekennzeichnet, dass** das Führungselement (6, 7) den oder die Permanentmagnete (8, 9) fixiert.

14. Ventil nach einem der vorgenannten Ansprüche, **dadurch gekennzeichnet, dass** zwei Führungselemente (6, 7) vorgesehen sind, die zwei Permanentmagnete (8, 9) einschließen.

15. Ventil nach Anspruch 14, **dadurch gekennzeichnet, dass** die Magnete (8, 9) und die Führungselemente (6, 7) formschlüssig aneinander gefügt sind.

16. Ventil nach einem der Ansprüche 14 und 15, **dadurch gekennzeichnet, dass** ein Ausgleichselement für Fertigungstoleranzen der Magnete (8, 9) oder Führungselemente (6, 7) vorgesehen ist.

17. Ventil nach einem der Ansprüche 14-16, **dadurch gekennzeichnet, dass** die Magnete (8, 9) verformbar sind.

18. Ventil nach einem der Ansprüche 14-17, **dadurch gekennzeichnet, dass** die Magnete (8, 9) verformbare Vorsprünge aufweisen.

19. Haushaltsmaschine, insbesondere Kaffeemaschine mit einer Fluidleitung und einem Ventil, **dadurch gekennzeichnet, dass** das Ventil gemäß einem der vorgenannten Ansprüche ausgebildet ist.

## Claims

1. A valve for switching a fluid line, especially for water-conducting domestic machines such as coffee machines or the like,
- with a valve housing located at least partly inside an electromagnetic coil,
- at least two poles made from magnetisable material,
- between which an at least partly magnetic or magnetisable valve body is arranged movably,
- wherein at least one fluid line is guided by a pole and opens into an annular projecting valve seat,
- and the valve body comprises an area made from a flexible sealing material for sealing in a form-closed manner with the valve seat,
**characterised in that**
- outside the annular valve seat (17) a stop surface (27) for the valve body (13) is provided and
- between the valve seat (17) and the stop surface (27) a depression (30) is provided for mounting sealing material which is deformed by the pressing force on the valve seat (17)
and **in that** the stop surface (27) limits the pressing force.

2. Valve according to claim 1, **characterised in that** the valve housing (3) is arranged rotatably in the coil (2).

3. Valve according to one of the preceding claims, **characterised in that** the valve housing (3) is designed at least partly as a cylinder pipe.

4. Valve according to one of the preceding claims, **characterised in that** both pole shoes (4, 5) comprise fluid lines (18, 22).

5. Valve according to one of the preceding claims, **characterised in that** the pole shoes (4, 5) project out from the valve housing (3) on the front side.

6. Valve according to one of the preceding claims, **characterised in that** the pole shoes (4, 5) comprise line connections (19, 24).

7. Valve according to one of the preceding claims, **characterised in that** the valve housing (3) has essentially the same length as the control coil (2).

8. Valve according to one of the preceding claims, **characterised in that** the valve housing (3) is secured in the coil (2) by fixing elements (11, 12) arranged outside the control coil (2).

9. Valve according to one of the preceding claims, **characterised in that** one or more yoke plates (11, 12) are provided as the fixing element.

10. Valve according to one of the preceding claims, **characterised in that** at least one guiding element (6, 7) is arranged outside the valve housing (3) inside the control coil (2).

11. Valve according to claim 10, **characterised in that** the guiding element is designed as a sleeve (6, 7).

12. Valve according to one of the preceding claims, **characterised in that** it is bistable by means of at least one permanent magnet (8, 9).

13. Valve according to one of claims 10 and 11 and according to claim 12, **characterised in that** the guiding element (6, 7) fixes the permanent magnet or magnets (8, 9).

14. Valve according to one of the preceding claims, **characterised in that** two guiding elements (6, 7) are provided which enclose two permanent magnets (8, 9).

15. Valve according to claim 14, **characterised in that** the magnets (8, 9) and the guiding elements (6, 7) are joined together in a form-closed manner.

16. Valve according to one of claims 14 and 15, **characterised in that** a compensating element is provided for the manufacturing tolerances of the magnets (8, 9) or guiding elements (6, 7).

17. Valve according to one of claims 14-16, **characterised in that** the magnets (8, 9) can be deformed.

18. Valve according to one of claims 14-17, **characterised in that** the magnets (8, 9) have deformable projections.

19. Domestic machines, in particular a coffee machine with a fluid line and a valve, **characterised in that** the valve is designed according to one of the preceding claims.

## Revendications

1. Soupape de commutation d'une conduite de fluide, en particulier pour des appareils électroménagers dans lesquels circule de l'eau, tels que des cafetières ou similaires,
- comprenant une cage de soupape se trouvant au moins partiellement à l'intérieur d'une bobine électromagnétique,
- au moins deux pôles réalisés dans un matériau magnétisable,
- entre lesquels est agencé de façon mobile un corps de soupape au moins partiellement magnétique ou magnétisable,
- au moins une conduite de fluide passant par un pôle et débouchant dans un siège de soupape annulaire dépassant,
- et le corps de soupape présentant une zone réalisée dans un matériau d'étanchéité souple pour obtenir une correspondance de forme étanche sur le siège de soupape,
**caractérisée en ce qu'**il est prévu
- à l'extérieur du siège de soupape annulaire (17) une surface de butée (27) pour le corps de soupape (13) et
- entre le siège de soupape (17) et la surface de butée (27) un évidement (30) destiné à recevoir un matériau d'étanchéité déformé par la pression exercée sur le siège de soupape (17)
et **en ce que** la surface de butée (27) limite la pression exercée.

2. Soupape selon la revendication 1,
**caractérisée en ce que** la cage de soupape (3) est montée mobile en rotation dans la bobine (2).

3. Soupape selon l'une des revendications précédentes,
**caractérisée en ce que** la cage de soupape (3) est réalisée au moins partiellement sous la forme d'un tube cylindrique.

4. Soupape selon l'une des revendications précédentes,
**caractérisée en ce que** les deux épanouissements polaires (4, 5) comprennent des conduites de fluide (18, 22).

5. Soupape selon l'une des revendications précédentes,
**caractérisée en ce que** les épanouissements polaires (4, 5) dépassent de la cage de soupape (3) du côté frontal.

6. Soupape selon l'une des revendications précédentes,
**caractérisée en ce que** les épanouissements polaires (4, 5) présentent des raccords de conduite (19, 24).

7. Soupape selon l'une des revendications précédentes,
**caractérisée en ce que** la cage de soupape (3) présente essentiellement la même longueur que la bobine de commande (2).

8. Soupape selon l'une des revendications précédentes,
**caractérisée en ce que** la fixation de la cage de soupape (3) dans la bobine (2) est prévue par l'intermédiaire d'éléments de fixation (11, 12) agencés à l'extérieur de la bobine de commande (2).

9. Soupape selon l'une des revendications précédentes,
**caractérisée en ce qu'**il est prévu une ou plusieurs tôles de culasse (11, 12) comme élément de fixation.

10. Soupape selon l'une des revendications précédentes,
**caractérisée en ce qu'**au moins un élément de guidage (6, 7) est agencé à l'extérieur de la cage de soupape (3) à l'intérieur de la bobine de commande (2).

11. Soupape selon la revendication 10,
**caractérisée en ce que** l'élément de guidage est réalisé sous la forme d'un manchon (6, 7).

12. Soupape selon l'une des revendications précédentes,
**caractérisée en ce qu'**elle est bistable au moyen d'au moins un aimant permanent (8, 9).

13. Soupape selon l'une des revendications 10 et 11 et selon la revendication 12,
**caractérisée en ce que** l'élément de guidage (6, 7) fixe le ou les aimants permanents (8, 9).

14. Soupape selon l'une des revendications précédentes,
**caractérisée en ce qu'**il est prévu deux éléments de guidage (6, 7), lesquels comprennent deux aimants permanents (8, 9).

15. Soupape selon la revendication 14,
**caractérisée en ce que** les aimants (8, 9) et les éléments de guidage (6, 7) sont assemblés les uns aux autres par correspondance de forme.

16. Soupape selon l'une des revendications 14 et 15,
**caractérisée en ce qu'**il est prévu un élément de compensation pour les tolérances de fabrication des aimants (8, 9) ou des éléments de guidage (6, 7).

17. Soupape selon l'une des revendications 14 à 16,
**caractérisée en ce que** les aimants (8, 9) sont déformables.

18. Soupape selon l'une des revendications 14 à 17,
**caractérisée en ce que** les aimants (8, 9) présentent des saillies déformables.

19. Appareil électroménager, en particulier cafetière présentant une conduite de fluide et une soupape,
**caractérisé en ce que** la soupape est réalisée selon l'une des revendications précédentes.
